# EUROPÄISCHE PATENTSCHRIFT

(11) **EP 2 598 843 B1**
(45) Veröffentlichungstag und Bekanntmachung des Hinweises auf die Patenterteilung: **01.11.2017**
(21) Anmeldenummer: 11748287.7
(22) Anmeldetag: 27.06.2011
(51) Int. Cl.: G07F 15/00, G07C 1/10, B60L 11/18, G01D 4/00, H04L 9/32, H04L 29/06

(54) **SICHERUNG UND ÜBERPRÜFUNG DER SYSTEMZEIT EINER LADESTATION**
SAVING AND CHECKING THE SYSTEM TIME OF A CHARGING STATION
SÉCURISATION ET CONTRÔLE DU TEMPS SYSTÈME D'UN POSTE DE CHARGE

(30) Priorität: 23.09.2010 DE 102010046174; 28.07.2010 DE 102010032582
(43) Veröffentlichungstag der Anmeldung: 05.06.2013
(73) Patentinhaber: innogy SE, 45128 Essen (DE)
(72) Erfinder: GAUL, Armin, 59379 Selm (DE)
(74) Vertreter: Cohausz & Florack
(86) Internationale Anmeldenummer: PCT/EP2011/060692
(87) Internationale Veröffentlichungsnummer: WO 2012/013433

(56) Entgegenhaltungen:
- DE-A1- 10 034 274
- DE-A1- 10 308 232
- DE-A1- 10 331 447
- DE-A1- 19 729 218
- DE-A1-102005 033 162

## Beschreibung

Der Gegenstand betrifft ein Verfahren zur Überprüfung einer in einer Messstation bereitgestellten Zeitinformation. Darüber hinaus betrifft der Gegenstand eine Messstation als auch eine Prüfstelle, sowie ein System mit einer Ladestation und einer Prüfstelle. Insbesondere bezieht sich der Gegenstand auf Vorrichtungen und Verfahren im Bereich der Elektromobilität, insbesondere der Ladestationen für Elektrofahrzeuge und der Abrechnung der durch die Elektrofahrzeuge bezogenen elektrischen Energie. Der Gegenstand bezieht sich ferner auch Messstationen im Bereich der intelligenten Stromzähler.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Bei in öffentlichen Bereichen installierten Ladestationen muss jedoch sichergestellt werden, dass der Kunde die bezogene Energie bezahlt. Auch sollte sichergestellt werden, dass der Kunde vor dem Beziehen elektrischer Energie Kenntnis über die zu erwartenden Kosten hat. Entsprechend des herkömmlichen Tankvorgangs sollte der Kunde unmittelbar vor dem Aufladen der Batterie wissen, welche Kosten ihn erwarten. So sollte dem Kunden beispielsweise der Preis für eine Kilowattstunde bekannt sein. Darüber hinaus sollte sichergestellt sein, dass der Kunde auch tatsächlich nur die Energiemenge in Rechnung gestellt bekommt, die er auch bezogen hat.

Es ist der politische Wille, verschiedene Tarife für bezogene elektrische Energie zu verschiedenen Uhrzeiten zur Verfügung zu stellen. Insbesondere soll in Zukunft eine Vielzahl von verschiedenen Zeittarifen angeboten werden, so dass es mehrere Tarifumschaltzeiten pro Tag gibt. Tarifumschaltzeiten gehen stets einher mit veränderten Einheitensätzen, d.h. veränderten Kosten pro bezogene Energiemenge, insbesondere pro bezogener Kilowattstunde elektrischer Energien. Aufgrund dieses politischen Willens ist es auch erforderlich, im häuslichen und industriellen Umfeld variable Stromtarife zur Verfügung zu stellen. Diese Variabilität kann dadurch erreicht werden, dass sogenannte "smart meter" als Energiezähler eingebaut werden, mit denen vom Energieversorger gesteuert variable Stromtarife umsetzbar sind. Diese "smart meter" verfügen in der Regel über einen geeichten Stromzähler und eine Uhr. Die Uhr muss eichrechtlichen Bedingungen genügen, um sicherzustellen, dass die Uhrzeit im "smart meter" auch korrekt ist und eine korrekte Abrechnung des variablen Stromtarifs erfolgt. Es ist jedoch nicht gewünscht, die Uhr in jedem Zähler zu eichen, da dies einen enormen Kostenaufwand produziert.

Bei aktuellen Installationen, bei denen in der Regel nur eine Tarifumschaltung pro Tag, beispielsweise bei Geschäfts- und Firmenkunden sowie bei Speicherheizungskunden stattfand, war es für den Kunden möglich, die Uhrzeit am geeichten Zähler für die Elektrizität (Energiezähler, Stromzähler) abzulesen und zu überprüfen, ob die Zeit mit einer von ihm wahrgenommenen Zeit übereinstimmt. So wurde seitens der Eichbehörden unterstellt, dass der Kunde stets überprüfen konnte, ob die seinem Zähler zugeordnete Uhr die für die Tarifermittlung korrekte Uhrzeit anzeigt.

Finden jedoch mehr als ein bis zwei Tarifumschaltungen pro Tag statt, kann der Kunde nicht mehr selbsttätig feststellen, ob die Zeitpunkte der Tarifumschaltungen korrekt sind. Insbesondere bei echter Zeitvariabilität, bei der eine Mehrzahl von Tarifumschaltungen pro Tag stattfinden, ist dies durch den betroffenen Kunden kaum mehr zu leisten. Dieses Problem verschärft sich darüber hinaus noch bei Energiezählern, deren zugeordnete Uhr dem Kunden nicht frei zugänglich ist. So ist beispielsweise bei Ladestationen für Elektrofahrzeuge geplant, diese ohne Sichtanzeige zu versehen, wodurch der Kunde die Zeit des Zählers nicht mehr ablesen kann. Weicht nun die Zeitbasis innerhalb der Messstation von der tatsächlichen Zeit ab, so kann es dazu kommen, dass die bezogene Energiemenge zu einem falschen Tarif abgerechnet wird. Der Kunde könnte diese Abweichung gegebenenfalls dadurch feststellen, dass sein Rechnungsbeleg (z.B. Tankbeleg) eine andere Ladezeit ausweist, als er sich notiert hat. Für den Messstellenbetreiber an der Ladestation besteht jedoch keinerlei Möglichkeit, zu überprüfen, ob die Uhrzeit korrekt ist.

Aus der DE 100 34 048 274 A1 ist eine Vorrichtung sowie ein Verfahren zur Unterstützung eines Benutzers beim Ablesen eines Zählerstandes bekannt. Die Vorrichtung weist eine Funktionsbaugruppe auf, die dazu geeignet ist, den Verbrauch von Gas oder Wasser zu messen. Über eine Leseeinheit wird der Zählerstand aus der Funktionsbaugruppe ausgelesen und unter der Verwendung der von einem elektronischen Zeitmesser gelieferten aktuellen Zeit sowie einem gespeicherten Messeinrichtungsidentifikators an ein Verschlüsselungsprogramm weitergegeben. Dort wird aus den genannten Größen ein Kode erzeugt und an einer für den Kunden sichtbaren Anzeige dargestellt. Anschließend wird der Kode über eine Mobilfunkstrecke übertragen, verarbeitet und gespeichert. Nachteilig an diesem Verfahren ist jedoch, dass die von einem elektronischen Zeitmesser gelieferte aktuelle Zeitinformation nicht noch einmal überprüft wird und somit einem Fälschungsrisiko ausgesetzt ist.

Dem Gegenstand lag somit die Aufgabe zugrunde, die in einer Messstation bereitgestellte Zeitinformation gegenüber Manipulationen und Verfälschungen zu sichern. Dem Gegenstand lag auch die Aufgabe zugrunde, einen Energiezähler zur Verfügung zu stellen, der hinsichtlich der Uhrzeit eichrechtlichen Bedingungen genügt.

Diese Aufgabe wird gemäß einem ersten Aspekt durch ein Verfahren nach Anspruch 1 gelöst. Ferner wird diese Aufgabe durch eine Messstation nach Anspruch 18, eine Prüfeinrichtung nach Anspruch 19 sowie ein System nach Anspruch 20 gelöst.

Messstationen im Sinne des Gegenstandes können Stromzähler im häuslichen oder industriellen Bereich sein. Insbesondere sogenannte "smart meter" können nachfolgend unter den Begriff Messstation fallen. Auch Ladestationen für Elektrofahrzeuge können unter den Begriff Messstation fallen. Die Nachfolgenden Ausführungen beziehen sich auf Messstationen im Allgemeinen und Ladestationen im speziellen. Für den Fachmann ist es ersichtlich, dass die Begriffe Ladestation und Messstation austauschbar sind, so dass wenn nachfolgend auf Ladestationen verwiesen wird, auch Messstationen im Allgemeinen betroffen sind, soweit dies technisch sinnvoll ist, sowie umgekehrt.

Beim Ladevorgang bezieht das Elektrofahrzeug elektrische Energie von der Ladestation. In der Ladestation wird diese elektrische Energie mit Hilfe eines Messgerätes (Zählers) gemessen. Auch in anderen Anwendungen wird die bezogene Energie durch ein Messgerät (Zähler) in einer Messstation erfasst und gemessen. während des Ladevorgangs als auch beim Abschluss des Ladevorgangs ist es notwendig, dass die bezogene Energiemenge (z.B. der Messgerätezählerstand) für Abrechungszwecke erfasst wird und der Benutzer des Fahrzeugs Kenntnisse über die bezogene Energiemenge erhält.

Neben dem Erfassen der bezogenen Energiemenge und der Information des Kunden über die bezogene Energiemenge ist es notwendig, den Tarif bestimmen zu können, zu dem die Energie bezogen wurde. Insbesondere bei Zeitvariabilität kann es vorkommen, dass z.B. bei einem längeren Ladevorgang, der beispielsweise länger als eine, beispielsweise sechs Stunden dauert, verschiedene Tarifwechsel stattfinden. Um diese Tarifwechsel exakt abbilden zu können, ist es notwendig, dass die in der Messstation bereitgestellte Zeitinformation korrekt ist. Auch im Haushalt wird über den gesamten Tag Strom bezogen, welcher ggf. zu unterschiedlichen Tarifen abgerechnet werden muss.

Zeitinformation im Sinne des Gegenstandes kann ein Datensatz sein, der Uhrzeit oder Datum enthält. Die Zeitinformation kann auch eine fortlaufende Nummer (Zeitindex) sein, die mit einer Auflösung von zumindest einer Sekunde, vorzugsweise 0,1 Sekunden in eine Uhrzeit umrechenbar ist.

Die Zeit innerhalb der Messstation muss streng monoton steigend sein. Sollte festgestellt werden, dass die Zeitinformation nicht streng monoton steigend ist, kann auf einen Fehler geschlossen werden, was nachfolgend noch gezeigt werden wird. Außerdem muss die gemessene Energiemenge, d.h. der Zählerstand, ebenfalls streng monoton steigen. Auch hier kann bei einer Abweichung von dieser Vorgabe auf einen Fehler geschlossen werden, was ebenfalls nachfolgend noch dargelegt werden wird.

Gegenständlich wird vorgeschlagen, dass in der Messstation die Zeitinformation erfasst wird. Das kann bedeutet, dass die Zeitinformation von einem Zeitgeber innerhalb der Messstation ausgelesen und zur Verfügung gestellt wird. Die erfasste Zeitinformation wird innerhalb der Messstation derart aufbereitet, dass sie an eine zentrale Prüfstelle übermittelt werden kann. Diese Übermittlung kann beispielsweise über Funk, beispielsweise über ein Mobilfunknetz erfolgen. Auch ist es möglich, dass die Übermittlung der Zeitinformation mittels Power-Line Communication über das Energiekabel erfolgen kann, mit welchem die Messstation an eine Trafostation und das daran angeschlossene Energieversorgungsnetz angeschlossen ist. Andere Übertragungsverfahren sind ebenfalls möglich.

Das Übermitteln der Zeitinformation kann das Senden der Zeitinformation von der Messstation an die Prüfstelle und/oder dass Abfragen der Zeitinformation durch die Prüfstelle von der Messstation umfassen. Dabei ist es möglich, dass die Prüfstelle eine Abfrage an die Messstation übermittelt, mit der Zählerstände und/oder Zeitinformationen abgefragt werden. Diese Abfrage kann eine Nachricht an die Messstation sein. In Erwiderung auf die Abfrage kann die Messstation ein Datenpaket an die Prüfstelle übermitteln, in dem die gewünschten Informationen enthalten sind. Das Datenpaket wird nachfolgend näher beschrieben.

Um sicher zu stellen, dass die Messstation nicht mit einer veralteten und damit falschen Zeitinformation antwortet kann bei der Abfrage einen Schlüssel (z. B. 32 Byte länge) von der Prüfstelle an die Messstation übermittelt werden. Der Schlüssel kann von der Prüfstelle vergeben werden. Der Schlüssel kann eine für die Messstation unbekannte Information sein. Erst mit dem Empfang der Abfrage kann diese Information der Messstation bekannt gemacht werden. Der Schlüssel kann eine für die Abfrage erstellte Zufallszahl sein.

Dieser Schlüssel muss nicht verschlüsselt übertragen werden, sondern lediglich aus Sicht der Messstation bzw. des darin enthaltenen Zählers zufällig sein.

Da dieser zufällige Schlüssel der Messstation / dem Zähler vor der Abfrage nicht bekannt sein kann, kann die Messstation / der Zähler auch keine Antwort zu einem anderen Zeitpunkt vorbereitet haben, sondern muss die Antwort jetzt (also nach dem Eintreffen der Abfrage mit dem Schlüssel) berechnen. Da der Abfrageprozess auf die Antwort wartet, muss der Zähler die Antwort auch in der Wartezeit berechnen. Das heißt, dass wenn in dem Datenpaket, welches als Antwort auf die Abfrage 30 von der Messstation an die Prüfstelle übermittelt wird auch der Schlüssel enthalten ist, kann die Prüfstelle feststellen, dass das Datenpaket als Antwort auf die Abfrage erstellt wurde. Dies führt dazu, dass seitens der Prüfstelle festgestellt werden kann, dass das Datenpaket frühestens zum Zeitpunkt der Abfrage erstellt wurde und spätestens zum Zeitpunkt des Eingangs des Datenpaktes in der Prüfstelle.

Wenn der Schlüssel vorzugsweise vom Zähler signiert in der unterschriebenen Antwort auftaucht, dann ist sicher, dass die Antwort im Zeitfenster zwischen Frage und Antwort erstellt hat. Sofern die Prüfung erfolgreich ist, ist die Antwort im entsprechenden Zeitfenster zwischen Abfrage und Antwort entstanden.

Gemäß einem vorteilhaften Ausführungsbeispiels gibt es einen zentralen Zeitserver, der eine eichrechtlich überwachte Uhrzeit hat. Dieser Zeitserver kennt (z.B. über den Zugriff auf einen entsprechenden Stammdatenserver) alle Uhren (z.B. in Messstationen), die er überwachen soll. Auf Basis dieser Information sendet der Zeitserver nach einem zufälligen oder gesteuerten Muster Uhrzeitanfragen an einzelne / alle überwachten Uhren (Messstationen) aus. Diese Anfragen enthalten alle jeweils einen eigenen Schlüssel, der der Messstation / dem Zähler vorher nicht bekannt sein kann. Dieser Schlüssel und die Anfrage können in einem eichrechtlich gesicherten Logbuch (Drucker, Sprecher, Write once Medium,...) abgelegt werden. Nun wird die Antwort der Messstation abgewartet. Wenn die Antwort ankommt, wird nochmals die Uhrzeit der zentralen Zeitbasis abgefragt, und zusätzlich geprüft, ob der Schlüssel von der Messstation / vom Zähler signiert in der unterschriebenen Antwort auftaucht. Wenn ja, ist sicher, dass die Antwort im Zeitfenster zwischen Frage und Antwort erstellt wurde und das Ereignis kann ebenfalls im eichrechtlich gesicherten Logbuch (Drucker, Sprecher, Write once Medium,...) abgelegt werden. Falls nicht, kann der Eintrag entsprechend markiert, eine Alarmmeldung an das Kantrollcenter gegeben und das Ereignis im eichrechtlich gesicherten Logbuch (Drucker, Sprecher, Write once Medium,...) abgelegt werden.

Das Übermitteln der Zeitinformation kann, wie bereits erläutert, gesichert erfolgen. Auch ist es möglich, dass die Zeitinformation signiert übertragen wird. Hierbei ist es möglich, dass beispielsweise der die Zeitinformation enthaltene Datensatz (Datenpaket) mit einem privaten Schlüssel der Messstation signiert und/oder verschlüsselt wird. In dem Datensatz kann neben der Zeitinformation auch die Messstationsnummer, ein Statuswort, ein Zählerstand, ein Zählerstatus oder dergleichen enthalten sein.

Im Nachfolgenden werden die Begriffe "Signatur", "signieren" etc im Sinne einer elektronischen, datentechnischen Signatur verwendet. Auch kann durch das elektronische Signieren des Datenpakets sichergestellt werden, dass dieses nicht mehr nachträglich manipuliert wird.

Mit Hilfe eines eindeutigen, aus dem Datenpaket und einem dem Messgerät (Zähler) oder der Messstation zugeordneten Schlüssels erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und eines dem Messgerät (Zähler) oder der Messstation zugeordneten Schlüssels errechnet werden. Auch kann eine Signatur unmittelbar aus dem Datenpaket und dem dem Messgerät (Zähler) oder der Messstation zugeordneten Schlüssel errechnet werden.

Signieren kann ein Erstellen eines Kryptogramms als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogramms ist eine Überprüfung möglich, ob das Datenpaket tatsächlich von der Messstation erstellt wurde.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Eine Signatur kann mittels eines SHA-256 Verfahrens ermittelt werden. Hierbei kann beispielsweise eine Variante FIPS 180-2 verwendet werden. Insbesondere kann eine Signatur mit Hilfe eines Elliptic-Curve Kryptografieverfahrens ermittelt werden. Hierbei ist es beispielsweise möglich, dass ein ECC-Verfahren mit 192 Bit verwendet wird.

Durch die Signatur des Datenpakets ist sichergestellt, dass der in dem Datenpaket enthaltene Messwert und die Zeitinformation untrennbar miteinander verbunden sind. Wird einer der beiden Werte verändert, so ergäbe sich eine andere Signatur. Da der Nutzer die Zeitinformation selber erfassen kann, kann er auch eine Manipulation des Messwertes feststellen.

In der Prüfstelle kann gegenständlich die übermittelte Zeitinformation gelesen und ausgewertet werden. Hierbei wird vorgeschlagen, dass nachdem die Zeitinformation ausgelesen wurde, diese mit einer Zeitnormalen in der Prüfstelle verglichen wird. Vergleichen im Sinne des Gegenstandes kann dahingehend verstanden werden, dass die der Zeitinformation zugeordnete Uhrzeit und/oder das der Zeitinformation zugeordnete Datum mit einer Uhrzeit und einem Datum einer Zeitnormalen verglichen wird. Ein Vergleichen kann das Feststellen einer Abgleichung beinhalten.

Eine Zeitnormale kann eine Zeitinformation eines geeichten Zeitmessers beinhalten. Auch ist es möglich, dass die Zeitnormale aus einer oder mehreren Zeitinformationen, welche allesamt von geeichten Zeitmessern stammen, bestimmt wird.

Das Vergleichsergebnis des Vergleichs der übermittelten Zeitinformation mit der bereitgestellten Zeitnormalen wird gegenständlich abgespeichert. Das Abspeichern ermöglicht es, im Nachhinein zu überprüfen, ob und wann Veränderungen an der Zeitinformation der Messstation stattgefunden haben.

Die Vergleichsinformationen können über einen längeren Zeitraum, beispielsweise 90 Tage gespeichert werden und beispielsweise auch regelmäßig, beispielsweise monatlich, zu einem Bericht zusammengefasst werden. In diesem Bericht kann festgehalten werden, welche Unterschiede festgestellt wurden und worin die Unterschiede zwischen den Zeitinformationen und den Zeitnormalen bestanden. Die Prüfung der Vergleichsergebnisse kann beispielweise durch eine Eichbehörde durchgeführt werden, womit sichergestellt ist, dass Fehler in der durch die Messstation bereitgestellten Zeitinformation sicher erkannt werden und behoben werden können.

Gemäß einem vorteilhaften Ausführungsbeispiel wird vorgeschlagen, dass das Übermitteln der Zeitinformation das Senden der Zeitinformation von der Messstation an die Prüfstelle oder das Abfragen der Zeitinformation von der Prüfstelle in der Messstation umfasst. Hiermit sind sowohl Push- als auch Pull-Verfahren umfasst, um die Zeitinformation an die Prüfstelle zu übertragen. Das Pull-Verfahren kann entsprechend der oben geschilderten Abfrage von der Prüfstelle and die Messstation erfolgen. Die Prüfstelle "pullt" mit der Anfrage zusammen mit dem unbekannten Schlüssel zumindest die Zeitinformation von der Messstelle. Die Messstelle antwortet auf die Anfrage mit einem Datenpaket, welches signiert sein kann, in dem neben der abgefragten Information, z.B. die Zeitinformation, ein Zählerstand oder dergleichen, auch der unbekannte Schlüssel enthalten ist. Die Prüfstelle kann den unbekannten Schlüssel prüfen und somit feststellen, ob es sich bei der Antwort tatsächlich um die Antwort auf die von der Prüfstelle gesendete Abfrage handelt.

Beispielsweise ist es möglich, dass der Prüfstelle ein gesicherter Zugang zu den Messstationen zur Verfügung gestellt wird. Dieser gesicherte Zugang kann beispielsweise über Funk, drahtlos oder drahtgebunden erfolgen. Beispielweise ist es möglich, dass die Übertragung der Zeitinformation gegen Manipulation durch den öffentlichen Messstationsschlüssel oder Messgeräteschlüssel der Messstationen gesichert ist und die übertragenen Informationen prüfstellenseitig mit Hilfe eines privaten Messstationsschlüssel oder Messgeräteschlüssel entschlüsselt werden können. Auch ist es möglich, dass die Messstation so programmiert ist, dass diese in Abständen, beispielsweise in regelmäßigen Abständen, die Zeitinformation gesichert oder ungesichert an die Prüfstelle sendet. Somit ist es möglich, dass in Prüfintervalen oder auch stichprobenartig die in der Messstation bereitgestellte Zeitinformation auf Fehler überprüft wird.

wie Eingangs bereits erläutert, muss die Zeitinformation streng monoton steigend sein. Bereits gespeicherte Zeitinformationen dürfen nicht jünger sein, als neu ermittelte Zeitinformationen. Daher wird gemäß einem vorteilhaften Ausführungsbeispiel vorgeschlagen, dass das Vergleichen der übermittelten Zeitinformation mit einer Zeitnormalen das Überprüfen umfasst, ob die übermittelte Zeitinformation gleich oder älter als die Zeitnormale ist. Jede neu ermittelte Zeitinformation muss, wenn sie in der Prüfstelle angelangt ist, gleich oder älter sein, als die Zeitnormale. Hierbei ist zu berücksichtigen, dass die Übertragung selbst mit einer Signallaufzeit verbunden ist, wodurch eine Zeitinformation, die älter ist als die Zeitnormale, wenn sie in der Prüfstelle angelangt ist, möglich ist. Die Abweichung darf jedoch in der Regel nicht mehr als ein Schwellwert, z.B. ein paar Sekunden, vorzugsweise weniger als eine Sekunde betragen. Ist die Abweichung größer als der Schwellwert, kann ein Fehlerprotokoll geschrieben werden. Auch kann ein Fehlerprotokoll geschrieben werden, wenn die in der Prüfstelle empfangene Zeitinformation jünger ist als die der Zeitnormalen, was bedeutet würde, dass die Uhrzeit in der Messstation vorgeht.

Um Abweichungen der in der Messstation bereitgestellten Zeitinformation von der Zeitnormalen nachträglich kontrollieren zu können, wird vorgeschlagen, dass für eine beim Vergleichen der übermittelten Zeitinformation mit der Zeitnormalen festgestellte Abweichung ein Protokolleintrag generiert wird.

Gemäß einem vorteilhaften Ausführungsbeispiel wird vorgeschlagen, dass der Protokolleintrag signiert abgespeichert wird. Hierbei kann der Protokolleintrag beispielsweise mit Hilfe eines in der Prüfstelle bekannten Schlüssels signiert werden. Auch ist es möglich, dass der Protokolleintrag mit der Zeitinformation der Zeitnormalen signiert wird. Auch ist es möglich, dass die empfangene Zeitinformation zusammen mit der Zeitinformation der Zeitnormalen, insbesondere mit dem Datum und der Uhrzeit einer anerkannten Zeitbasis, signiert wird.

Aus diesem Grunde wird gemäß einem vorteilhaften Ausführungsbeispiel vorgeschlagen, dass die übermittelte Zeitinformation mit zumindest einer von der Prüfstelle bereitgestellten Uhrzeitinformation und/oder einer Datumsinformation der Zeitnormalen in der Prüfstelle signiert wird.

Gemäß einem vorteilhaften Ausführungsbeispiel wird Vorgeschlagen, dass die Zeitinformation in einem Zähler, einer Zähleinrichtung oder einer mit diesen verbundenen Zusatzeinrichtung von der Messstation bereitgestellt wird. Hierbei ist es möglich, dass die Zeitinformation durch das Gerät zur Verfügung gestellt wird, welches eichrechtlich auch für die Messung der bezogenen Energiemenge verantwortlich ist. Insbesondere sollte die Zeitinformation von einem Gerät innerhalb der Messstation zur Verfügung gestellt werden.

Gemäß einem vorteilhaften Ausführungsbeispiel wird Vorgeschlagen, dass die Messstation zum Einstellen und/oder Abgleichen der bereitgestellten Zeitinformation mit der Zeitnormalen ein eine Information zur Zeitnormalen umfassendes Stellsignal empfängt und mit Hilfe der empfangenen Information zur Zeitnormalen die bereitgestellte Zeitinformation korrigiert.

Um sicherzustellen, dass die in der Messstation bereitgestellte Zeitinformation, insbesondere auch nach einem Stromausfall stets möglichst genau ist, ist das Übertragen der Zeitinformation der Zeitnormalen mit Hilfe eines Stellsignals vorgeschlagen. Hierbei kann die Übertragung beispielsweise über DCF77 oder über das Internet, beispielsweise von dem Internetserver der physikalischen technischen Prüfanstalt Braunschweig empfangen werden. Mit Hilfe dieses Stellsignals kann die bereitgestellte Zeitinformation möglichst genau in der Messstation vorgehalten werden. Manipulationen an der Zeitinformation innerhalb der Messstation sind dann beispielsweise nur zwischen zwei empfangenen Stellsignalen möglich, da ansonsten das Stellsignal dafür sorgt, dass die Zeitinformation aktualisiert wird.

Ein Angriff auf das Stellsignal würde dazu führen, dass in der Messstation eine fehlerhafte Zeitinformation vorgehalten wird. Diese fehlerhafte Zeitinformation würde aber spätestens durch das Übertragen der Zeitinformation an die Prüfstelle festgestellt werden.

Darüber hinaus ist es auch möglich, Manipulationen an der Zeitinformation innerhalb der Messstation zu entdecken. Hierzu wird beispielsweise vorgeschlagen, dass in der Messstation in Abständen Zeitinformationen gespeichert werden.

Somit kann gemäß einem vorteilhaften Ausführungsbeispiel die in der Messstation vorhandene aktuelle Zeitinformation mit gespeicherten Zeitinformationen verglichen werden. Bei diesem Vergleich kann beispielsweise festgestellt werden, ob die aktuelle Zeitinformation in der Messstation stets jünger ist, als eine bereits gespeicherte Zeitinformation der Messstation. Ist dies nicht der Fall, so kann von einer Manipulation ausgegangen werden und ein entsprechender Protokolleintrag in der Messstation generiert werden. Solche Protokolleinträge können beispielsweise auch gesichert durch die Prüfstelle ausgelesen werden. Hierbei können beispielsweise die gleichen Kommunikationswege verwendet werden, wie für das Übermitteln der Zeitinformationen selbst.

Gemäß einem vorteilhaften Ausführungsbeispiel wird aber auch vorgeschlagen, dass die Zeitvergleichsergebnisse an die Prüfstelle übermittelt werden, um diese der Prüfstelle zur Überprüfung bereitzustellen.

Um sicherzustellen, dass die Zeitvergleichsergebnisse auf der Übertragungsstrecke vor Manipulationen gesichert sind, wird vorgeschlagen, dass die Zeitvergleichsergebnisse in der Messstation signiert und/oder kodiert werden. Hierzu kann ein privater Messstationsschlüssel verwendet werden. Ein Messstationsschlüssel kann auch ein Messgeräteschlüssel sein.

wie eingangs bereits erläutert wurde, muss nicht nur die Zeitinformation streng monoton steigend sein, sondern auch der Messzählerstand. Ist der Messzählerstand für aufeinanderfolgende Messungen nicht steigend, so kann ebenfalls von einer Manipulation ausgegangen werden. Aus diesem Grunde wird gemäß einem vorteilhaften Ausführungsbeispiel vorgeschlagen, dass zusammen mit der Zeitinformation ein Messzählerstand an die Prüfstelle übermittelt wird, wobei der Messzählerstand ein Zählerstand eines Energiezählers ist und Messzählerstände zusammen mit den Zeitinformationen gespeichert werden. Dies ermöglicht es, zu überprüfen, ob die Messzählerstände mit voranschreitender zeit ebenfalls steigend sind.

Um dies zu überprüfen, wird gemäß einem vorteilhaften Ausführungsbeispiel vorgeschlagen, dass in der Prüfstelle überprüft wird, ob der jüngste übermittelte Messzählerstand gleich oder größer aller älterer gespeicherter Messzählerstände ist. Der jüngste Messzählerstand ist derjenige Messzählerstand, dem die jüngste Zeitinformation zugeordnet ist. Ausgehend von dieser Zeitinformation werden die bereits gespeicherten Messzählerstände mit einer älteren Zeitinformation ermittelt und es kann überprüft werden, ob diese Messzählerstände kleiner oder gleichgroß des aktuellen, jüngsten Messzählerstandes sind.

Zum Ende eines Abrechnungszeitraums erhält der Nutzer vom Stromnetzbetreiber/Energielieferanten eine Rechnung über die von ihm bezogene Energiemenge. In dieser Rechnung kann beispielsweise jeder Ladevorgang aufgeschlüsselt nach Start und Ende des Ladevorgangs aufgelistet sein.

Zusätzlich kann jeder Rechnungsposition die Messgeräteidentifikation, beispielsweise eine Ladepunkt-ID, als auch eine Zählernummer zugeordnet sein. Zusätzlich können die Start- und Endzählerstände sowie die Start- und Endzeiten (Zeit, Datum) jeder Rechnungsposition zugeordnet sein. Mit diesen Informationen kann dem Kunden in der Rechnung die bezogene Energiemenge für jeden Ladevorgang mitgeteilt werden.

Da die Energiekosten abhängig von dem jeweiligen Tarif sind, ist es notwendig, dass die Start- und Endzeiten kontrollierbar korrekt sind. Aus diesem Grunde wird die Zeitinformation mit einer zeitnormalen abgeglichen und Abweichungen protokolliert.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Die zuvor genannten Verfahren können auch als Computerprogramm oder als auf einem Speichermedium gespeichertes Computerprogramm realisiert werden. Hierbei kann fahrzeugseitig, messstationsseitig und/oder abrechnungszentralenseitig (prüfstellenseitig) ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1: einen schematischen Aufbau eines Systems zum Laden eines Elektrofahrzeugs;
- Fig. 2: einen schematischen Aufbau einer Prüfstelle;
- Fig. 3: ein Ablaufdiagramm eines Verfahrens nach einem ersten Ausführungsbeispiel;
- Fig. 4: ein Ablaufdiagramm eines Verfahren zum Abfragen einer Zeitinformation.

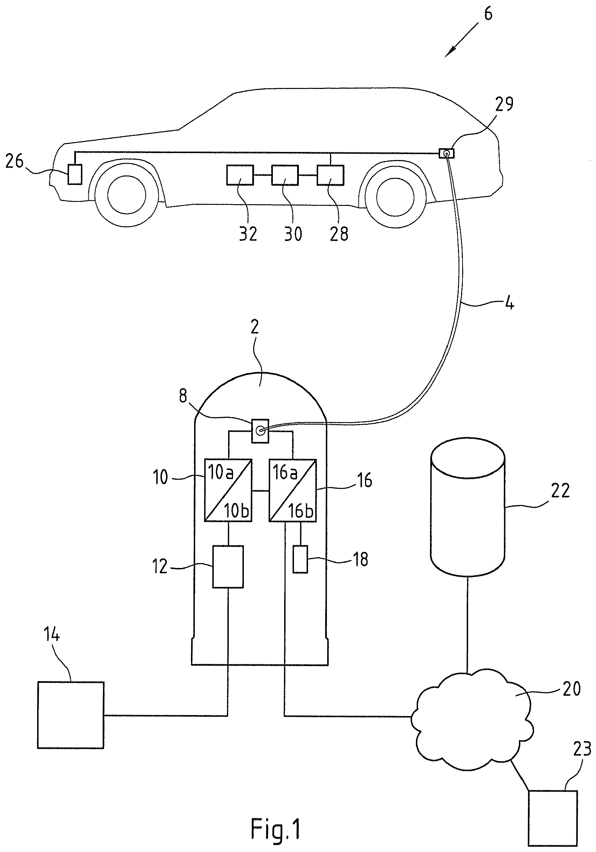

Fig. 1 zeigt eine Ladestation 2 welche über ein Verbindungskabel 4 mit einem Fahrzeug 6 elektrisch verbunden ist. In der Ladestation 2 ist eine Anschlussdose 8 zum Anschluss des Verbindungskabels 4 vorgesehen. Über das Verbindungskabel 4 werden zum Einen Energie übertragen und zum Anderen Daten zwischen Fahrzeug 6 und Ladestation 2 ausgetauscht.

Die elektrische Leistung wird über einen elektrischen Anschluss 12 von einem elektrischen Energieversorgungsnetz 14 bezogen.

Gekoppelt an das Messgerät 10a ist eine Recheneinheit 16 mit einer Kommunikationseinheit 16a und einer Signatureinheit 16b. Die Signatureinheit 16b kann eine dem Ladegerät 2 bzw. dem Messgerät 10 zugeordnete eindeutige Identifikation, beispielsweise eine privaten Messgeräteschlüssel 18a erfassen. Auch kann ein öffentlicher Messgeräteschlüssel 18b erfasst werden.

Die Recheneinheit 16 ist über ein Datennetz 20 mit einer Abrechnungszentrale 22 verbunden.

Die Anschlussdose 8 ist elektrisch mit einem Messgerät 10a verbunden. Das Messgerät 10a misst die elektrische Leistung, die über die Anschlussdose 8 an das Fahrzeug 6 über das Verbindungskabel 4 abgegeben wird. Daneben ist eine Uhr 10b mit dem Messgerät 10a gekoppelt. Die Uhr 10b ermittelt eine lokale Zeitinformation und stellt diese bereit. Diese Zeitinformation kann in Form eines Datensatzes zur Verfügung gestellt werden.

Die Uhr 10b ist in der Lage, durch ein externes Stellsignal eingestellt zu werden. In oder an der Uhr 10b ist ein Speicher (nicht gezeigt) vorgesehen, in dem in Abständen die lokalen Zeitinformationen gespeichert werden können.

Die abgespeicherten Zeitinformationen können durch die Signatureinheit 16b signiert werden, wobei die Signatur mit Hilfe des Messgeräteschlüssels 18, bevorzugt dem privaten Messgeräteschlüssel 18a, erstellt werden kann. Die signierten Zeitinformationen sind abspeicherbar. Zusammen mit den abgespeicherten Zeitinformationen können die Zählerstände abgespeichert werden. Somit können Datensätze zumindest aus Zählerstand und Zeitinformation in dem Speicher abgespeichert werden.

Ferner ist eine Prüfstelle 23 vorgesehen, die logisch und räumlich von der Abrechnungszentrale 22 und der Ladestation 2 getrennt ist. Insbesondere kann die Prüfstelle 23 mit dem Datennetz 20, z.B. einem Weitverkehrsnetz, z.B. dem Internet, verbunden sein. Die Prüfstelle 23 kann beispielsweise in den Räumen und/oder unter Aufsicht einer Eichbehörde betrieben werden.

Insbesondere ist es möglich, die Zeitinformationen von der Uhr 10b zu erfassen und zur weiteren Verarbeitung bereitzustellen. Dies kann darin liegen, dass die lokale Zeitinformation über das Datennetz 20 an die Prüfstelle 23 übermittelt wird. Ferner kann die Prüfstelle 23 auch auf die lokale Zeitinformation über das Datennetz 20 zugreifen. Die in dem Speicher gespeicherten Datensätze mit Zeitinformation und Messgerätezählerstand können ebenfalls von der Prüfstelle abgerufen und geladen werden.

Die Uhr 10b kann durch ein externes Zeitsignal (Stellsignal) gestellt werden. Hierzu kann die Uhr 10b drahtlos, z.B. DCF77 oder drahtgebunden über z.B. das Datennetz von einem Zeitgeber ein Zeitsignal empfangen. Mit Hilfe dieses Signals ist es möglich, die Uhr 10b lokal möglichst exakt zu halten. Doch ist es möglich, dieses Zeitsignal zu manipulieren. Eine Manipulation führte dazu, dass die Uhr 10b falsche Zeitinformationen bereitstellt.

Lokal in der Ladestation 2 kann diese Manipulation dadurch festgestellt werden, dass die aktuellen Zeitinformationen regelmäßig mit gespeicherten Zeitinformationen verglichen werden. Die aktuelle Zeitinformation muss immer jünger als alle gespeicherten Zeitinformationen sein. Ansonsten kann ein Protokolleintrag generiert und abgespeichert werden. Auch können die Protokolleinträge an die Prüfstelle 23 gesendet werden. Schließlich kann ein einem detektierten Fehler eine Statusbit (Messgerätestatus) gesetzt werden.

In dem Fahrzeug 6 ist neben einer mit einem Anschluss 29 verbundenen Batterie 26 eine Kommunikationseinheit 28 vorgesehen. Die Kommunikationseinheit 28 ermöglicht das Senden und Empfangen von Daten auf dem Verbindungskabel 4. Angeschlossen an die Kommunikationseinheit 28 ist eine Signatureinheit 30. Die Signatureinheit 30 kann von dem Fahrzeug 6 eine eindeutige Identifikation 32 erfassen.

Während des Ladevorgangs des Fahrzeugs 6 an der Ladestation 2 wird Energie von dem Energieversorgungsnetz 14 in die Batterie 26 des Fahrzeugs 6 gespeist. Die Menge der eingespeisten Energie wird mittels des Messgeräts 10 erfasst. Die Energiemenge, beispielsweise ein Zählerstand des Messgerätes 10a, als auch andere Daten, wie beispielsweise die Identifikation der Ladestation 2 und/oder die Identifikation des Messgerätes 10a, Zeitinformationen wie z.B. ein Zeitstempel, eine Uhrzeit, ein Datum und/oder ein Zeit-Index der Uhr 10b, ein Status der Ladestation 2 und/oder ein Status des Messgerätes 10a, ein Anfangszählerstand, ein Endzählerstand und/oder dergleichen kann über das Verbindungskabel 4 an das Fahrzeug 6 und/oder die Abrechnungszentrale 22 und/oder die Prüfstelle 23 übermittelt werden.

Hierzu übermittelt die Kommunikationseinheit 16a ein Datenpaket. In dem Datenpaket können die genannten Messgrößen gespeichert werden. In dem Datenpaket kann auch ein öffentlicher Messgeräteschlüssel 18b gespeichert werden. Auch können neben dem Datenpaket der öffentliche Messgeräteschlüssel 18b und/oder Signaturen zwischen Ladestation 2 und Fahrzeug 6 und/oder Abrechnungszentrale 22 und/oder Prüfstelle 23 ausgetauscht werden. Die oben genannten Daten können signiert in einem Datenpaket von der Messstation an die Prüfstelle übermittelt werden. Die Signatur kann mit einem in der Prüfstelle bekannten Messstationsschlüssel erfolgen. In der Prüfstelle kann aus dem empfangenen Datenpaket und mit dem Messstationsschlüssel eine Vergleichssignatur errechnet werden und mit der empfangenen Signatur verglichen werden. Stimmen die Signaturen überein, ist das Datenpaket unverändert in der 25 Prüfstelle empfangen worden.

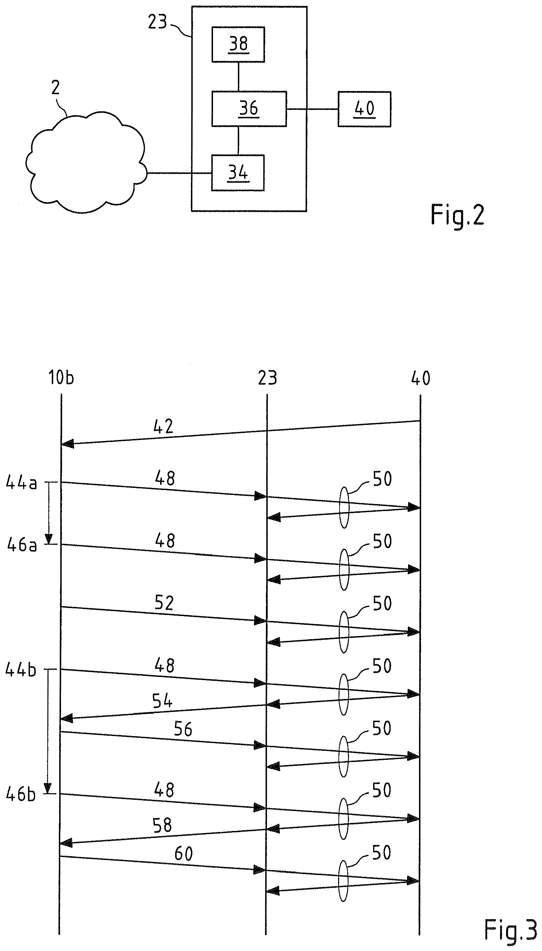

Fig. 2 zeigt einen schematischen Aufbau einer Prüfstelle 23. Zu erkennen ist, dass die Prüfstelle über eine Kommunikationseinrichtung 34 mit dem Datennetz 20 verbunden ist und hierüber insbesondere Zeitinformationen und Messgerätezählerstände von der Ladestation 2 empfangen kann. Der Austausch der Zeitinformationen und der Messgerätezählerstände kann im Push- oder Pull-Verfahren erfolgen.

Die von der Kommunikationseinrichtung 34 empfangenen Zeitinformationen können in der Prüfstelle 23 mittels einer Vergleichseinrichtung 36 mit einer Zeitnormalen verglichen werden und in einem Speicher 38 abgespeichert werden. Zusammen mit den Zeitinformationen können auch die empfangenen und den Zeitinformationen zugeordneten Messgerätezählerstände in dem Speicher 38 abgespeichert sein.

Die Vergleichseinrichtung 26 kann ein internes oder externes Zeitsignal von einer Zeitgeber 40 für eine Zeitnormale empfangen. Der Zeitgeber 40 ist bevorzugt ein geeichter Zeitgeber, dessen Zeitnormale von der Prüfstelle 23 als verlässlich und rechtlich zugelassen anerkannt wird.

Die Überprüfung der Zeitinformation in der Ladestation 2 ist in Fig. 3 schematisch dargestellt.

In der Figur 3 ist der Ablauf einer Kommunikation zwischen einer Uhr 10b, der Prüfstelle 23 und dem Zeitgeber 40 dargestellt.

Zur Erläuterung wird zunächst die Übertragung einer Zeitinformation als Stellsignal 42 von dem geeichten Zeitgeber 40 an die Uhr 10b dargestellt. Diese Übertragung des Stellsignals 42 kann regelmäßig erfolgen. Auch kann die Uhr 10b über das Kommunikationsnetz 20 dieses Stellsignal 42 anfordern.

Insbesondere nach einem Stromausfall wird die Uhr 10b zur Synchronisation das Stellsignal 42 anfordern. Mit Hilfe des Stellsignals 42 ist es möglich, die Uhr 10b zu stellen, so dass diese Zeitinformationen andauern aktualisiert zur Verfügung stellen kann. Die Zeitinformationen können mit Hilfe eines Zeitindexes kodiert ausgegeben werden. Hierbei kann eine Genauigkeit von mindestens einer Sekunde vorzugsweise weniger als einer Sekunde möglich sein. Der Zeitindex kann ein fortlaufender, monoton steigender Wert sein.

Insbesondere bei Ladestationen 2 für Elektrofahrzeuge 6 kommt es dazu, dass Ladezeiten besonders lang, in der Regel mehr als eine Stunde, sind. Durch die Notwendigkeit, zeitvariable Tarife zur Verfügung zu stellen, kann es dazu kommen, dass während eines Ladevorgangs ein Tarifwechsel stattfindet. Solche Tarifwechsel führen zu unterschiedlichen Strompreisen, wodurch es notwendig ist, dass die Zeitbasis, mittels der die bezogene Energiemenge berechnet wird, korrekt ist.

Manipulationen an der Zeitbasis sind zu vermeiden und sollten Manipulationen auftreten, müssen diese möglichst sicher erkannt werden.

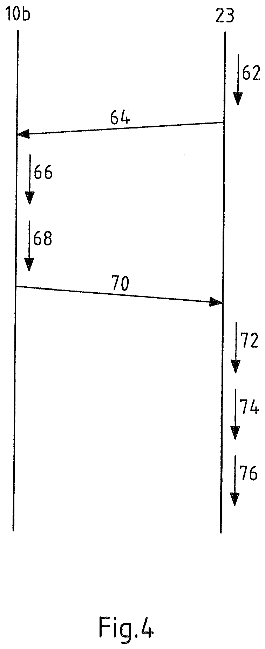

Hierzu ist folgendes Verfahren vorgeschlagen. Zu Beginn 44a eines Ladezyklus wird ein Datensatz erstellt, der wesentliche Informationen zu der Ladestations-ID der Messgeräte-ID, des Messgerätestatus, des Messgerätezählerstands, der Zeitinformation, und gegebenenfalls öffentlicher oder privater Schlüssel enthält. Dieser Datensatz kann über das Datennetz 20 an die Abrechnungszentrale 22 übermittelt werden. Außerdem ist es möglich, dass zusätzlich die Zeitinformation zusammen mit einem Messgerätezählerstand an die Prüfstelle 23 übermittelt 48 wird. Die Übermittlung des Datensatzes kann auch auf Anforderung der Prüfstelle 23 erfolgen, wobei dann die Prüfstelle 23 eine Anfrage mit einem unbekannten Schlüssel an die Ladestation 2 richten kann, wie in Fig. 4 gezeigt wird.

Die Prüfstelle 23 kann aus dem empfangenen Datensatz zunächst die Zeitinformation ermitteln und gleichzeitig einen Wert einer Zeitnormalen von dem Zeitgeber 40 abfragen 50.

Die von der Uhr 10b empfangene 48 Zeitinformation wird mit der Zeitnormalen des Zeitgebers 40 verglichen. Hierbei darf die empfangene Zeitinformation nur älter oder gleich der Zeitinformation der Zeitnormalen sein, da ansonsten die Uhr 10b vorgeht. Das Vergleichsergebnis wird von der Prüfstelle 23 abgespeichert. Zusätzlich zu dem Vergleichsergebnis kann die empfangene 48 Zeitinformation zusammen mit dem Messgerätezählerstand signiert durch Zeit- und/oder Datumsinformationen der Zeitnormalen abgespeichert werden.

Darüber hinaus kann der empfangene Messgerätezählerstand mit bereits gespeicherten Messgerätezählerständen verglichen werden. Der empfangene Messgerätezählerstand muss größer oder gleich den bereits gespeicherten, älteren Zeitinformationen zugeordneten Zählerständen sein, da ansonsten eine Manipulation vorliegt.

Zum Ende 46a eines Ladezyklus kann erneute ein entsprechender Datensatz erstellt werden und an die Prüfstelle 23 übermittelt werden. Auch dieser Datensatz wird mit Hilfe
einer Zeitnormalen überprüft und Abweichungen werden in einem Prüfprotokoll abgelegt.

Darüber hinaus ist es möglich, dass die Uhr 10b in regelmäßigen Abständen Zeitinformationen an die Prüfstelle 23 sendet 52. Die von der Prüfstelle 23 empfangenen Zeitinformationen werden mit der Zeitnormalen verglichen und Abweichungen werden protokolliert. Auch diese Zeitinformationen können ausgelöst durch eine Anfrage der Prüfstelle 23, in der ein unbekannter Schlüssel enthalten ist, gesendet werden, siehe auch Fig. 4.

In der Fig. 3 ist ein zweiter Ladezyklus gezeigt, bei dem zu Beginn 44b einer Ladung und zum Ende 44b einer Ladung ein Datensatz aus Zeitinformationen und Zählerstand an die Prüfstelle 23 gesendet 48 wird. Diese Datensätze werden entsprechend des oben genannten in der Prüfstelle 23 überprüft.

Ferner ist dargestellt, dass die Prüfstelle 23 während des Ladezyklus eine Abfrage 54 an die Uhr 10b sendet, woraufhin die Uhr 10b die aktuelle Zeitinformation an die Prüfstelle 23 zurücksendet 56. Auch diese abgefragte Zeitinformation kann durch die Prüfstelle 23 mit Hilfe der Zeitnormalen überprüft werden und Abweichungen können werden protokolliert. Die Abfrage der Zeitinformation ist näher in Fig. 4 dargestellt.

Auch ist es möglich, dass außerhalb eines Ladezyklus die Prüfstelle 23 eine Abfrage 58 an die Uhr 10b sendet, woraufhin die Uhr 10b die aktuellen Zeitinformationen an die Prüfstelle 23 zurücksendet 60. Die Abfrage der Zeitinformation ist näher in Fig. 4 dargestellt. Auch hierbei kann die Prüfstelle 23 die empfangene Zeitinformation mit der Zeitnormalen vergleichen und bei einer Abweichung einen entsprechenden Protokolleintrag generieren.

Die Vergleichsergebnisse können in der Prüfstelle über einen längeren Zeitraum, beispielsweise 90 Tage gespeichert werden. Die Prüfstelle 23 kann stichprobenartig verschiedene Ladestationen 2 bzw. die Zeitinformation dieser Ladestationen abfragen. Die Kommunikation zwischen der Prüfstelle 23 und der Ladestation 2 kann über einen Schlüssel verschlüsselt sein. Beispielsweise kann hierbei der private Messgeräteschlüssel 18a einer jeden Ladestation 2 verwendet werden. In der Prüfstelle 23 empfangene Zeitinformationen können signiert mit Zeit und Datum der Zeitnormalen in der Prüfstelle 23 abgespeichert werden.

Die von der Prüfstelle 23 erstellten Vergleichsergebnisse können in einem Bericht zusammengefasst und zur Verfügung gestellt werden.

Ferner ist es möglich, dass die Prüfstelle 23 auf die internen Protokolleinträge der Ladestation 2 zugreifen kann, um von der Ladestation 2 selbst festgestellte Abweichungen der Uhrzeit auslesen zu können. Die entsprechenden Protokolleinträge können ebenfalls signiert ist der Ladestation 2 gespeichert sein. Zur Signatur kann beispielsweise der private Messgeräteschlüssel 18a jeder Ladestation 2 verwendet werden.

Fig. 4 zeigt einen Ablauf einer Abfrage einer Zeitinformation und/oder eines Datensatzes mit und/oder ohne Zeitinformation von der Abrechnungszentrale 23 an die Ladestation 2. In einem Schritt 62 erstellt die Prüfstelle 23 einen neuen, zufälligen Schlüssel, der aus Ziffer und/oder Zeichen bestehen kann. Dieser Schlüssel kann z.B. eine Schlüssellänge von 16 Byte oder 32 Byte haben. Ein solcher Schlüssel kann pro Abfrage und pro Ladestation 2 jeweils neu erstellt werden. Hierzu kann ein Zufallsgenerator eingesetzt werden. In einem Schritt 64 sendet die Prüfstelle 23 den neuen Schlüssel an die Ladestation 2.

Die Ladestation 2 erstellt 66 aufgrund der Abfrage ein Datenpaket, welches zumindest die Zeitinformation, eine Zähleridentifikation, einen Zählerstatus und ggf. einen Messwert enthält. Dieses Datenpaket wird um den empfangenen, bis zum Empfang in der Ladestation unbekannten Schlüssel ergänzt.

Das Datenpaket wird dann in der Ladestation 2 mit dem Messgeräteschlüssel signiert 68. Hierzu wird eine Signatur des Datenpaketes erstellt.

Das Datenpaket zusammen mit der Signatur wird in einem Schritt 70 zurück an die anfragende Prüfstelle 23 übermittelt.

In der Prüfstelle 23 wird eine Vergleichssignatur aus dem empfangenen Datenpaket und dem in der Prüfstelle bekannten Messgeräteschlüssel errechnet 72. Anschließend werden in der Prüfstelle 23 die beiden Signaturen verglichen 74. Stimmen diese nicht überein, so kann darauf geschlossen werden, dass das Datenpaket oder die Signatur nach dem Signieren in der
Ladestation verändert wurden. Ein entsprechender Eintrag kann abgespeichert werden.

Stimmen die Signaturen überein, so ist sichergestellt, dass sich das Datenpaket und die Signatur bei der Übertragung von Ladestation 2 zu Prüfstelle 23 nicht verändert haben. Anschließend kann der in dem Datenpaket enthaltene Schlüssel mit dem in der Anfrage enthaltenen Schlüssel verglichen 76 werden.

Stimmen die Schlüssel überein, so kann darauf geschlossen werden, dass das Datenpaket in der Ladestation 2 frühestens mit dem Empfang der Anfrage von der Prüfstelle 23 erstellt wurde, da ansonsten der Schlüssel in der Ladestation 2 noch nicht bekannt gewesen wäre. Auch dieses Ergebnis kann abgespeichert werden.

Stimmen die Schlüssel nicht überein, so kann darauf geschlossen werden, dass das Datenpaket in der Ladestation 2 unabhängig von dem Empfang der Anfrage von der Prüfstelle 23 erstellt wurde. Dies kann auf eine Manipulation der Zeitinformation in der Ladestation 2 schließen lassen und ein entsprechender Kontrolleintrag kann abgespeichert werden.

Die obige Beschreibung bezieht sich auf eine Ladestation 2 für Elektrofahrzeuge. Die dort aufgezeigten Verfahren und Vorrichtungen lassen sich aber ebenso in sonstigen Messstationen, z.B. intelligenten Stromzählern, einsetzen und gelten somit auch für solche Ausführungsformen.

Mit Hilfe des gezeigten Verfahrens ist es möglich, die für eine Abrechnung von bezogener Energie verwendete Zeitbasis möglichst manipulationssicher zu gestalten. Ferner ist es möglich, Manipulationen zu detektieren und eine eichrechtlich einwandfreie Abrechnung von Energie zur Verfügung zu stellen.

## Patentansprüche

1. Verfahren zur Überprüfung einer in einem Stromzähler und/oder einer Ladestation (2) für Elektrofahrzeuge (6), bereitgestellten Zeitinformation umfassend:
- Erfassen der in dem Stromzähler und/oder der Ladestation für Elektrofahrzeuge (2) bereitgestellten Zeitinformation,
- Empfangen eines von einer von dem Stromzähler und/oder der Ladestation für Elektrofahrzeuge (2) räumlich getrennten Prüfstelle (23) erstellten, in dem Stromzähler und/oder der Ladestation für Elektrofahrzeuge (2) unbekannten alphanumerischen Zufallswerts in dem Stromzähler und/oder der Ladestation für Elektrofahrzeuge (2),
- Erstellen eines Datenpakets umfassend zumindest die Zeitinformation und den alphanumerischen Zufallswert,
- Übermitteln des Datenpakets von dem Stromzähler und/oder der Ladestation für Elektrofahrzeuge (2) an die Prüfstelle (23),
- Vergleichen des in dem Datenpaket enthaltenen übermittelten alphanumerischen Zufallswerts mit dem in der Prüfstelle (23) erstellten alphanumerischen Zufallswerts,
- Abspeichern eines Vergleichsergebnisses in der Prüfstelle (23) und dass
- die übermittelte Zeitinformation mit einer in der Prüfstelle (23) bereitgestellten Zeitnormalen verglichen wird.

2. Verfahren nach Anspruch 1, **dadurch gekennzeichnet, dass** das Übermitteln der Zeitinformation das Senden der Zeitinformation von dem Stromzähler und/oder der Ladestation für Elektrofahrzeuge (2) an die Prüfstelle (23) und/oder dass Abfragen der Zeitinformation durch die Prüfstelle (23) von dem Stromzähler und/oder der Ladestation für Elektrofahrzeuge (2) umfasst.

3. Verfahren nach einem der Ansprüche 1 bis 2, **dadurch gekennzeichnet, dass** das Vergleichen der übermittelten Zeitinformation mit einer Zeitnormalen das Überprüfen umfasst, ob die übermittelte Zeitinformation gleich oder älter als die Zeitnormale ist.

4. Verfahren nach einem der Ansprüche 1 bis 3, **dadurch gekennzeichnet, dass** für eine beim Vergleichen der übermittelten Zeitinformation mit der Zeitnormalen festgestellte Abweichung ein Protokolleintrag generiert wird.

5. Verfahren nach einem der Ansprüche 1 bis 4, **dadurch gekennzeichnet, dass** die übermittelte Zeitinformation mit zumindest einer von der Prüfstelle (23) bereitgestellten Uhrzeitinformation und/oder einer Datumsinformation der Zeitnormalen in der Prüfstelle (23) signiert wird.

6. Verfahren nach einem der Ansprüche 1 bis 5, **dadurch gekennzeichnet, dass** die Zeitinformation in einem Zähler, einer Zähleinrichtung oder einer mit diesen verbundenen Zusatzeinrichtung des Stromzählers und/oder der Ladestation für Elektrofahrzeuge (2) bereitgestellt wird.

7. Verfahren nach einem der Ansprüche 1 bis 6, **dadurch gekennzeichnet, dass** der Stromzähler und/oder die Ladestation für Elektrofahrzeuge (2) zum Einstellen und/oder Abgleichen der bereitgestellten Zeitinformation mit der Zeitnormalen ein eine Information zur Zeitnormalen umfassendes Stellsignal empfängt und mit Hilfe der empfangenen Information zur Zeitnormalen die bereitgestellte Zeitinformation korrigiert.

8. Verfahren nach einem der Ansprüche 1 bis 7, **dadurch gekennzeichnet, dass** in dem Stromzähler und/oder der Ladestation für Elektrofahrzeuge (2) in Abständen Zeitinformationen gespeichert werden.

9. Verfahren nach Anspruch 7 oder 8, **dadurch gekennzeichnet, dass** in dem Stromzähler und/oder der Ladestation für Elektrofahrzeuge (2) die aktuelle Zeitinformation mit gespeicherten Zeitinformationen und/oder mit dem Stellsignal verglichen wird und Zeitvergleichsergebnisse gespeichert werden.

10. Verfahren nach Anspruch 9, **dadurch gekennzeichnet, dass** die Zeitvergleichsergebnisse an die Prüfstelle (23) übermittelt werden, und/oder dass die Zeitvergleichsergebnisse in dem Stromzähler und/oder der Ladestation für Elektrofahrzeuge (2) signiert werden.

11. Verfahren nach einem der Ansprüche 1 bis 10, **dadurch gekennzeichnet, dass** zusammen mit der Zeitinformation ein Messzählerstand an die Prüfstelle (23) übermittelt wird, wobei der Messzählerstand ein Zählerstand eines Energiezählers (10a) ist und Messzählerstände zusammen mit den Zeitinformationen gespeichert werden.

12. Verfahren nach Anspruch 11, **dadurch gekennzeichnet, dass** in der Prüfstelle (23) überprüft wird ob der jüngste übermittelte Messzählerstand gleich oder größer aller älteren gespeicherter Messzählerstände ist.

13. Stromzähler und/oder Ladestation für Elektrofahrzeuge, umfassend:
- einen Zähler (10b) eingerichtet zum Bereitstellen einer lokalen Zeitinformation,
- Erfassungsmittel eingerichtet zum Erfassen der in dem Stromzähler und/oder der Ladestation für Elektrofahrzeuge (2) bereitgestellten Zeitinformation,
- Empfangsmittel eingerichtet zum Empfangen eines von einer von dem Stromzähler und/oder der Ladestation für Elektrofahrzeuge (2) räumlich getrennten Prüfstelle (23) erstellten, in dem Stromzähler und/oder der Ladestation für Elektrofahrzeuge (2) unbekannten alphanumerischen Zufallswerts in dem Stromzähler und/oder der Ladestation für Elektrofahrzeuge (2),
- Rechenmittel eingerichtet zum Erstellen eines Datenpakets umfassend zumindest die Zeitinformation und den alphanumerischen Zufallswert,
- Übertragungsmittel (16a) eingerichtet zum Übermitteln des Datenpakets von dem Stromzähler und/oder der Ladestation für Elektrofahrzeuge (2) an eine von dem Stromzähler und/oder der Ladestation für Elektrofahrzeuge (2) räumlich getrennte Prüfstelle (23).

14. Prüfeinrichtung, umfassend:
- Rechenmittel zum Erstellen eines alphanumerischen Zufallswertes,
- Übertragungsmittel (34) eingerichtet zum Senden des alphanumerischen Zufallswertes an einen Stromzähler und/oder eine Ladestation für Elektrofahrzeuge (2) und zum Empfangen eines den Zufallswert und lokalen Zeitinformation enthaltenden Datenpakets von einem Stromzähler und/oder einer Ladestation für Elektrofahrzeuge (2),
- Speichermittel (38) eingerichtet zum Abspeichern eines Vergleichsergebnisses, und dass
- die Prüfeinrichtung ein Vergleichsmittel (36) aufweist, eingerichtet zum Vergleichen der übermittelten Zeitinformation mit einer in der Prüfstelle (23) bereitgestellten Zeitnormalen und zum Vergleichen des erstellen Zufallswertes mit dem empfangenen Zufallswert.

15. System mit zumindest einem Stromzähler und/oder einer Ladestation (2) nach Anspruch 13 und einer zentralen Prüfeinrichtung nach Anspruch 14.

## Claims

1. Method for verifying time information provided in an electric meter and/or a charging station (2) for electric vehicles (6), comprising:
- obtaining the time information provided in the electric meter and/or charging station for electric vehicles (2),
- receiving, in the electric meter and/or the charging station for electric vehicles (2),
- an alphanumeric random value which is produced by a verifying authority (23) which is spatially separated from the electric meter and/or the charging station for electric vehicles (2) and which is unknown in the electric meter and/or the charging station for electric vehicles (2) producing a data packet comprising at least the time information and the alphanumeric random value,
- transmitting the data packet from the electric meter and/or the charging station for electric vehicles (2) to the verifying authority (23),
- comparing the transmitted alphanumeric random value contained in the data packet with the alphanumeric random value produced in the verifying authority (23),
- storing a comparison result in the verification location (23) and in that
- the transmitted time information is compared with a time normal provided in the verifying authority (23).

2. Method according to claim 1, **characterised in that** the transmission of the time information comprises the sending of the time information from the electric meter and/or the charging station for electric vehicles (2) to the verifying authority (23) and/or the polling for the time information by the verifying authority (23) from the electric meter and/or the charging station for electric vehicles (2).

3. Method according to either claim 1 or 2, **characterised in that** the comparison of the transmitted time information with a time normal comprises the verification of whether the transmitted time information is the same as or older than the time normal.

4. Method according to any one of claims 1 to 3, **characterised in that**, for a deviation which is determined during the comparison of the transmitted time information with the time normal, a protocol entry is generated.

5. Method according to any one of claims 1 to 4, **characterised in that** the transmitted time information is signed with at least time of day information provided by the verifying authority (23) and/or date information of the time normal in the verifying authority (23).

6. Method according to any one of claims 1 to 5, **characterised in that** the time information is provided in a meter, a metering device or an auxiliary device of the electric meter and/or the charging station for electric vehicles (2), which auxiliary device is connected thereto.

7. Method according to any one of claims 1 to 6, **characterised in that** the electric meter and/or the charging station for electric vehicles (2) in order to adjust and/or reconcile the provided time information with the time normal receives a control signal comprising information relating to the time normal and using the information received relating to the time normal corrects the provided time information.

8. Method according to any one of claims 1 to 7, **characterised in that** time information is stored in the electric meter and/or the charging station for electric vehicles (2) at intervals.

9. Method according to claim 7 or 8, **characterised in that**, in the electric meter and/or the charging station for electric vehicles (2), the current time information is compared with stored time information and/or with the control signal and time comparison results are stored.

10. Method according to claim 9, **characterised in that** the time comparison results are transmitted to the verifying authority (23), and/or **in that** the time comparison results are signed in the electric meter and/or the charging station for electric vehicles (2).

11. Method according to any one of claims 1 to 10, **characterised in that**, together with the time information, meter count is transmitted to the verifying authority (23), wherein the meter count is a count of an energy meter (10a) and meter counts are stored together with the time information.

12. Method according to claim 11, **characterised in that** in the verifying authority (23) it is verified whether the most recently transmitted meter count is equal to or greater than all older stored measurement counter statuses.

13. Electric meter and/or charging station for electric vehicles, comprising:
- a meter (10b) configured to provide local time information,
- obtaining means configured to obtain the time information provided in the electric meter and/or the charging station for electric vehicles (2),
- receiving means configured to receive an alphanumeric random value in the electric meter and/or the charging station for electric vehicles (2), which is produced by a verifying authority (23) which is spatially separated from the electric meter and/or the charging station for electric vehicles (2) and which is unknown in the electric meter and/or the charging station for electric vehicles (2 - calculation means configured to produce a data packet comprising at least the time information and the alphanumeric random value,
- transmission means (16a) configured to transmit the data packet from the electric meter and/or the charging station for electric vehicles (2) to a verifying authority (23) which is spatially separated from the electric meter and/or the charging station for electric vehicles (2).

14. Verifying authority comprising:
- calculation means for producing an alphanumeric random value,
- transmission means (34) configured to transmit the alphanumeric random value to an electric meter and/or a charging station for electric vehicles (2) and to receive a data packet which contains the random value and local time information from an electric meter and/or a charging station for electric vehicles (2),
- storage means (38) configured to store a comparison result and in that
- the verifying authority has a comparison means (36) configured to compare the transmitted time information with a time normal provided in the verifying authority (23) and to compare the random value produced with the random value received.

15. System having at least one electric meter and/or a charging station (2) according to claim 13, and having a central verifying authority according to claim 14.

## Revendications

1. Procédé de contrôle d'une information de temps fournie dans un compteur de courant électrique et/ou dans une borne de recharge (2) pour des véhicules électriques (6), ledit procédé comprenant :
- la saisie de l'information de temps fournie dans le compteur de courant électrique et/ou dans la borne de recharge pour des véhicules électriques (2),
- la réception, dans le compteur de courant électrique et/ou dans la borne de recharge pour des véhicules électriques (2), d'une valeur aléatoire alphanumérique créée par un point de contrôle (23) séparé physiquement du compteur de courant électrique et/ou de la borne de recharge pour des véhicules électriques (2), ladite valeur aléatoire alphanumérique étant inconnue dans le compteur de courant électrique et/ou dans la borne de recharge pour des véhicules électriques (2),
- la création d'un paquet de données comprenant au moins l'information de temps et la valeur aléatoire alphanumérique,
- la transmission, au point de contrôle (23), du paquet de données du compteur de courant électrique et/ou de la borne de recharge pour des véhicules électriques (2),
- la comparaison de la valeur aléatoire alphanumérique transmise et contenue dans le paquet de données, avec la valeur aléatoire alphanumérique créée dans le point de contrôle (23),
- le stockage en mémoire d'un résultat comparatif dans le point de contrôle (23),
- et **se caractérisant par le fait que** l'information de temps transmise est comparée à un étalon de temps fourni dans le point de contrôle (23).

2. Procédé selon la revendication 1, **caractérisé en ce que** la transmission de l'information de temps comprend l'envoi, au point de contrôle (23), de l'information de temps provenant du compteur de courant électrique et/ou de la borne de recharge pour des véhicules électriques (2), et/ou comprend l'interrogation, par le point de contrôle (23), de l'information de temps provenant du compteur de courant électrique et/ou de la borne de recharge pour des véhicules électriques (2).

3. Procédé selon l'une des revendications 1 à 2, **caractérisé en ce que** la comparaison de l'information de temps transmise, avec un étalon de temps, comprend le contrôle pour savoir si l'information de temps transmise est identique ou antérieure à l'étalon de temps.

4. Procédé selon l'une quelconque des revendications 1 à 3, **caractérisé en ce qu'**une entrée de protocole est générée pour un écart constaté au moment où l'information de temps transmise est comparée à l'étalon de temps.

5. Procédé selon l'une quelconque des revendications 1 à 4, **caractérisé en ce que** l'information de temps transmise, avec au moins une information d'heure fournie par le point de contrôle (23) et/ou avec une information de date de l'étalon de temps, est signée dans le point de contrôle (23).

6. Procédé selon l'une quelconque des revendications 1 à 5, **caractérisé en ce que** l'information de temps est fournie dans un compteur, dans un dispositif de comptage ou dans un dispositif supplémentaire du compteur de courant électrique et/ou de la borne de recharge pour des véhicules électriques (2), ledit dispositif supplémentaire étant combiné avec ledit compteur.

7. Procédé selon l'une quelconque des revendications 1 à 6, **caractérisé en ce que** le compteur de courant électrique et/ou la borne de recharge pour des véhicules électriques (2) reçoit un signal de réglage comprenant une information concernant l'étalon de temps, ledit signal de réglage servant au réglage et/ou à la compensation de l'information de temps fournie avec l'étalon de temps et, à l'aide de l'information reçue concernant l'étalon de temps, corrige l'information de temps fournie.

8. Procédé selon l'une quelconque des revendications 1 à 7, **caractérisé en ce que** des informations de temps sont stockées en mémoire, par intervalles, dans le compteur de courant électrique et/ou dans la borne de recharge pour des véhicules électriques (2).

9. Procédé selon la revendication 7 ou 8, **caractérisé en ce que** l'information de temps réelle est comparée à des informations de temps stockées en mémoire et/ou comparée au signal de réglage, ladite comparaison étant effectuée dans le compteur de courant électrique et/ou dans la borne de recharge pour des véhicules électriques (2), et dans lequel et/ou dans laquelle sont stockés en mémoire des résultats comparatifs de temps.

10. Procédé selon la revendication 9, **caractérisé en ce que** les résultats comparatifs de temps sont transmis au point de contrôle (23), et/ou **en ce que** les résultats comparatifs de temps sont signés dans le compteur de courant électrique et/ou dans la borne de recharge pour des véhicules électriques (2).

11. Procédé selon l'une quelconque des revendications 1 à 10, **caractérisé en ce qu'**un relevé du compteur de mesure est transmis au point de contrôle (23), en même temps que l'information de temps, où le relevé du compteur de mesure est un relevé d'un compteur d'énergie (10a), et des relevés du compteur de mesure sont stockés en mémoire, en même temps que les informations de temps.

12. Procédé selon la revendication 11, **caractérisé en ce que** l'on vérifie, dans le point de contrôle (23), le fait de savoir si le relevé du compteur de mesure transmis le plus récemment est égal ou supérieur à tous les relevés du compteur de mesure, stockés en mémoire et plus anciens.

13. Compteur de courant électrique et/ou borne de recharge pour des véhicules électriques, comprenant :
- un compteur (10b) agencé pour servir à la fourniture d'une information de temps locale,
- un moyen de saisie agencé pour servir à la saisie de l'information de temps fournie dans le compteur de courant électrique et/ou dans la borne de recharge pour des véhicules électriques (2),
- un moyen de réception agencé pour servir à la réception, dans le compteur de courant électrique et/ou dans la borne de recharge pour des véhicules électriques (2), d'une valeur aléatoire alphanumérique créée par un point de contrôle (23) physiquement séparé du compteur de courant électrique et/ou de la borne de recharge pour des véhicules électriques (2), ladite valeur aléatoire alphanumérique étant inconnue dans le compteur de courant électrique et/ou dans la borne de recharge pour des véhicules électriques (2),
- un moyen de calcul agencé pour servir à la création d'un paquet de données comprenant au moins l'information de temps et la valeur aléatoire alphanumérique,
- un moyen de transmission (16a) agencé pour servir à la transmission du paquet de données du compteur de courant électrique et/ou de la borne de recharge pour des véhicules électriques (2), à un poste de contrôle (23) physiquement séparé du compteur de courant électrique et/ou de la borne de recharge pour des véhicules électriques (2).

14. Dispositif de contrôle comprenant :
- un moyen de calcul servant à la création d'une valeur aléatoire alphanumérique,
- un moyen de transmission (34) agencé pour servir à l'envoi de la valeur aléatoire alphanumérique, à un compteur de courant électrique et/ou à une borne de recharge pour des véhicules électriques (2), et pour servir à la réception d'un paquet de données d'un compteur de courant électrique et/ou d'une borne de recharge pour des véhicules électriques (2), ledit paquet de données contenant la valeur aléatoire et l'information de temps locale,
- un moyen de stockage en mémoire (38) agencé pour servir au stockage en mémoire d'un résultat comparatif,
- et **se caractérisant par le fait que** le dispositif de contrôle présente un moyen de comparaison (36) agencé pour servir à la comparaison de l'information de temps transmise, avec un étalon de temps fourni dans le point de contrôle (23), et pour servir à la comparaison de la valeur aléatoire créée, avec la valeur aléatoire reçue.

15. Système comprenant au moins un compteur de courant électrique et/ou une borne de recharge (2) selon la revendication 13 et comprenant un dispositif de contrôle central selon la revendication 14.
